# EUROPEAN PATENT APPLICATION

(11) **EP 4 603 388 A1**
(43) Date of publication of application: **20.08.2025**
(21) Application number: 25156710.3
(22) Date of filing: 07.02.2025
(51) Int. Cl.: B64D 11/06, B60R 22/00, B60R 22/26

(54) **AUXILIARY BELT RESTRAINT FOR AIRPLANE SEAT**

(30) Priority: 16.02.2024 US 202418443935
(71) Applicant: American Airlines, Inc., Fort Worth Texas 76155 (US)
(72) Inventor: MAPSTON, Jay, Fort Worth, 76155 (US)
(74) Representative: Turner, Craig Robert

(57) **Abstract**

An auxiliary belt restraint for an airplane seat, the airplane seat being reclinable from an upright configuration, in which the airplane seat is adapted to accommodate a passenger in a primary seating position, to a reclined configuration, in which the airplane seat is adapted to accommodate the passenger in an auxiliary seating position. A primary belt restraint is adapted to buckle the passenger in the primary seating position when the airplane seat is in the upright configuration. The auxiliary belt restraint is adapted to buckle the passenger in the auxiliary seating position when the airplane seat is in the reclined configuration. The auxiliary belt restraint may be coupled to or otherwise associated with the airplane seat. The airplane seat may include or be part of an airplane suite including a suite shell. The auxiliary belt restraint may be coupled to or otherwise associated with the suite shell.

## Description

### Technical Field

The present disclosure relates generally to airplane seats, and, more particularly, to an auxiliary belt restraint for an airplane seat, the airplane seat being reclinable from an upright configuration, in which the airplane seat is adapted to accommodate a passenger in a primary seating position, to a reclined configuration, in which the airplane seat is adapted to accommodate the passenger in an auxiliary seating position, and the auxiliary belt restraint being adapted to buckle the passenger in the auxiliary seating position when the airplane seat is in the reclined configuration.

### Brief Description of the Drawings

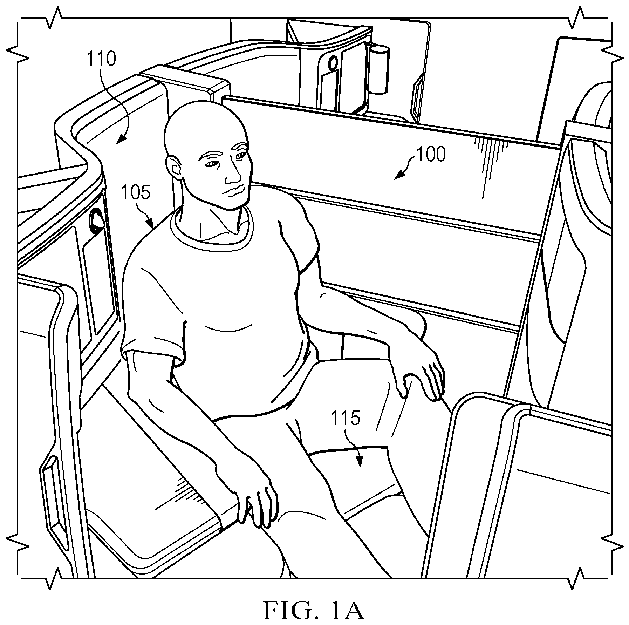

Figure 1A is a perspective view illustrating a portion an airplane suite in which a passenger is seated, according to one or more embodiments of the present disclosure.

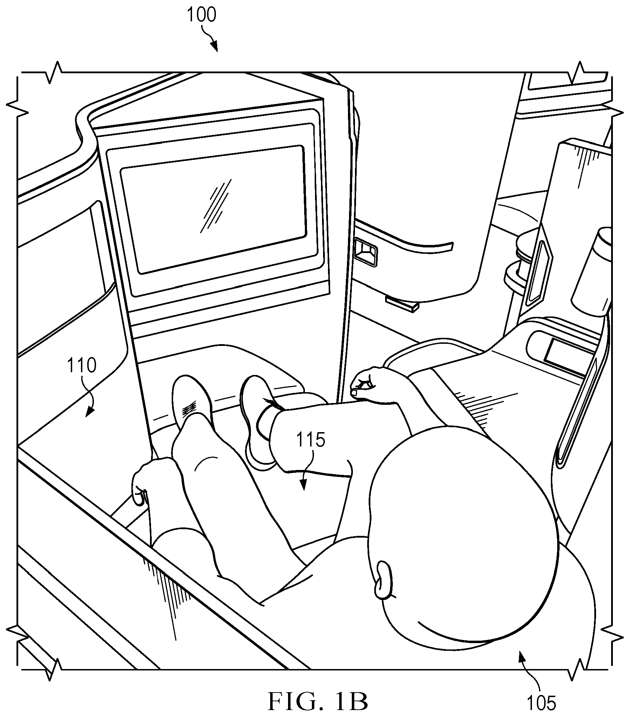

Figure 1B is a perspective view illustrating another portion of the airplane suite of Figure 1A in which the passenger is seated, according to one or more embodiments of the present disclosure.

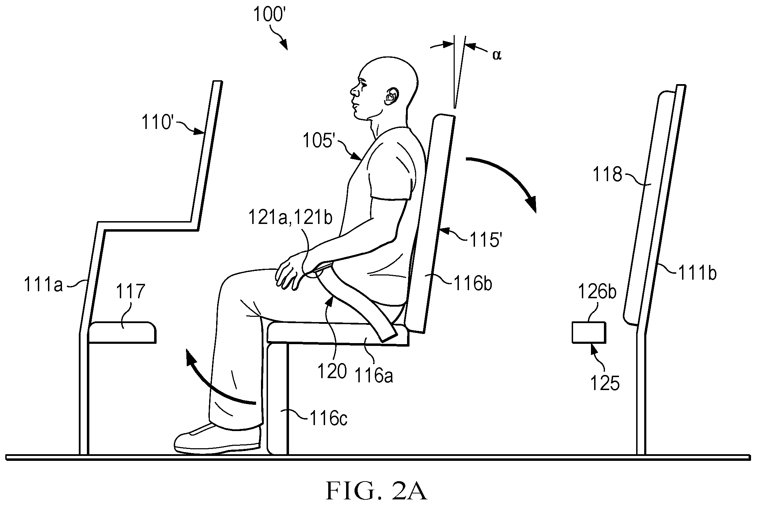

Figure 2A is a diagrammatic view illustrating an airplane suite in which a passenger is seated in a primary seating position, the airplane suite including a suite shell and a reclinable airplane seat, the reclinable airplane seat extending in an upright state or configuration, and the passenger being buckled in the primary seating position using a primary belt restraint coupled to or otherwise associated with the reclinable airplane seat, according to one or more embodiments of the present disclosure.

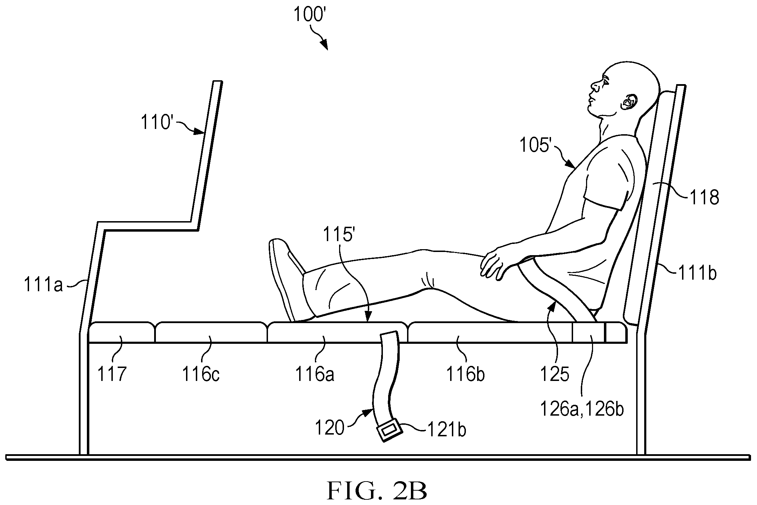

Figure 2B is a diagrammatic view illustrating the airplane suite of Figure 2A in which the passenger is seated in an auxiliary (e.g., rearward) seating position, the reclinable airplane seat extends in a reclined state or configuration, and the passenger is buckled in the auxiliary seating position using an auxiliary belt restraint coupled to or otherwise associated with the suite shell, according to one or more embodiments of the present disclosure.

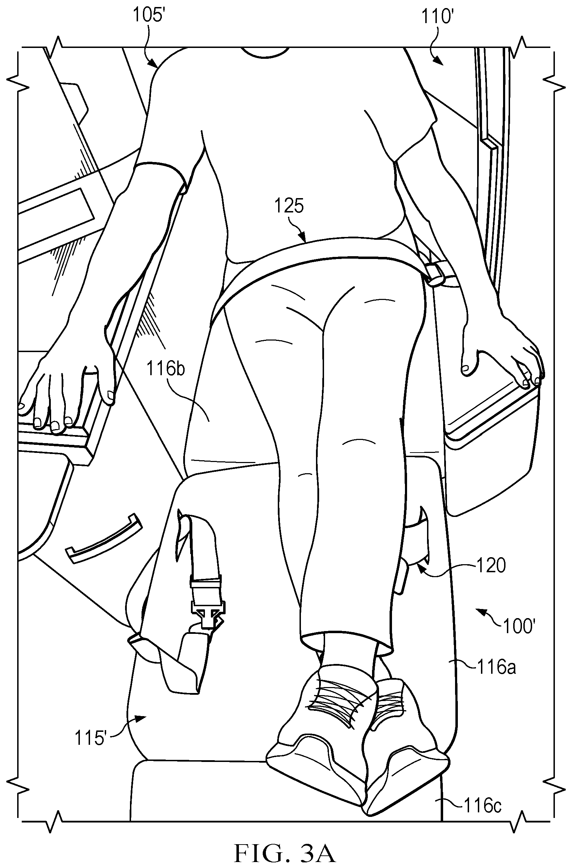

Figure 3A is a perspective view illustrating a portion of the airplane suite of Figures 2A-2B in which the passenger is seated in the auxiliary seating position, the reclinable airplane seat extends in the reclined state or configuration, and the passenger is buckled in the auxiliary seating position using the auxiliary belt restraint coupled to or otherwise associated with the suite shell, according to one or more embodiments of the present disclosure.

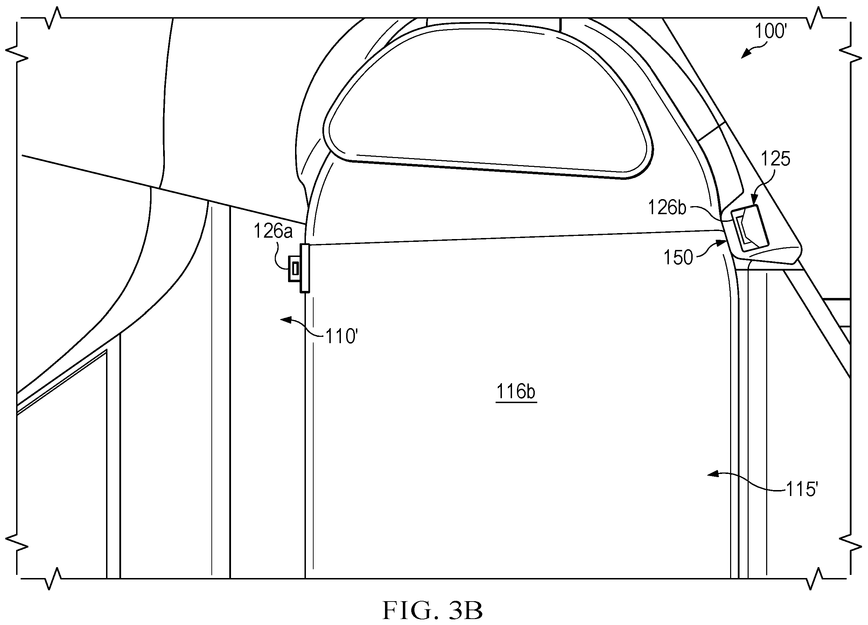

Figure 3B is a top plan view illustrating a portion of the airplane suite of Figures 2A-2B including the auxiliary belt restraint coupled to or otherwise associated with the suite shell, the auxiliary belt restraint being in an unbuckled state or configuration, and the reclinable airplane seat extending in the reclined state or configuration, according to one or more embodiments of the present disclosure.

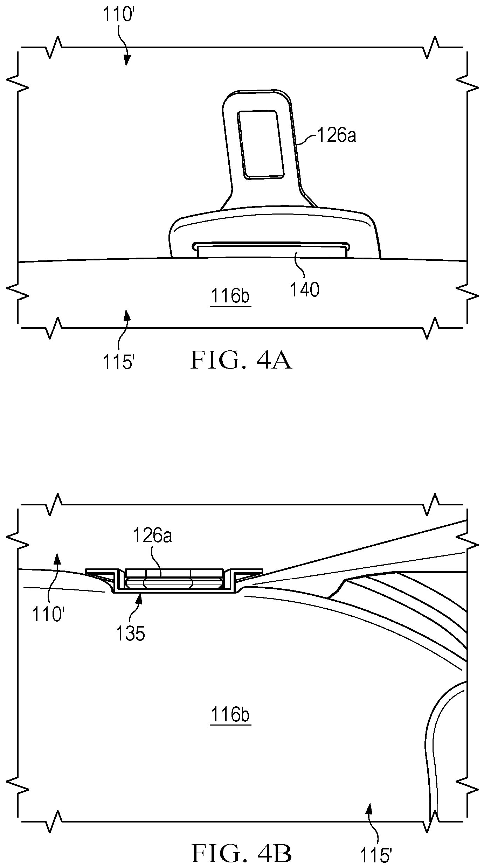

Figure 4A is a perspective view illustrating an auxiliary latch plate of the auxiliary belt restraint of Figures 2A-2B and 3A-3B in the unbuckled state or configuration, together with respective portions of the suite shell and the reclinable airplane seat, according to one or more embodiments of the present disclosure.
Figure 4B is a top plan view illustrating part of a shell-mounted retractor accommodating the auxiliary latch plate of Figure 4A in the unbuckled state or configuration, the retractor also retractably accommodating belt webbing for the auxiliary belt restraint, according to one or more embodiments of the present disclosure.

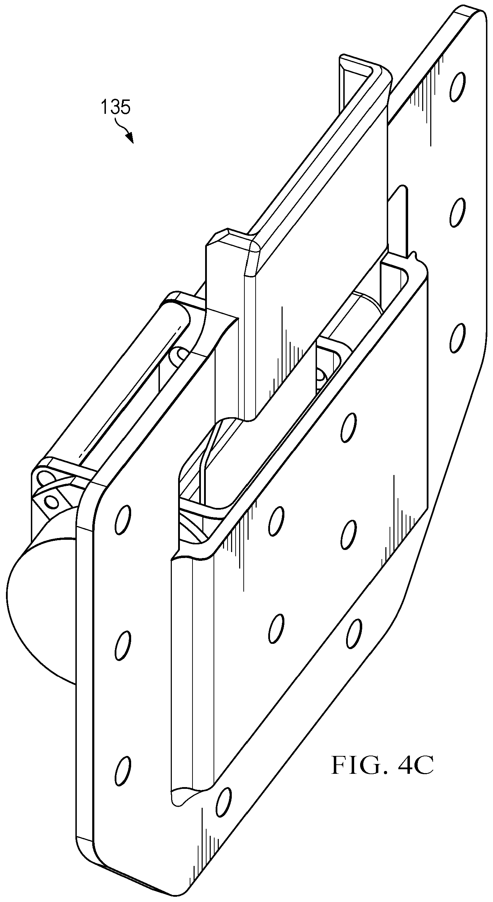

Figure 4C is a perspective view illustrating the shell-mounted retractor of Figure 4B, according to one or more embodiments of the present disclosure.

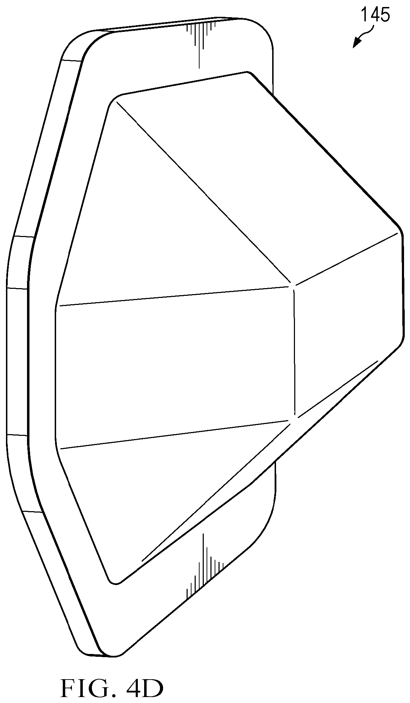

Figure 4D is a perspective view illustrating a shroud adapted to cover part of the shell-mounted retractor of Figure 4C that extends through the suite shell and into an adjacent airplane suite, according to one or more embodiments of the present disclosure.

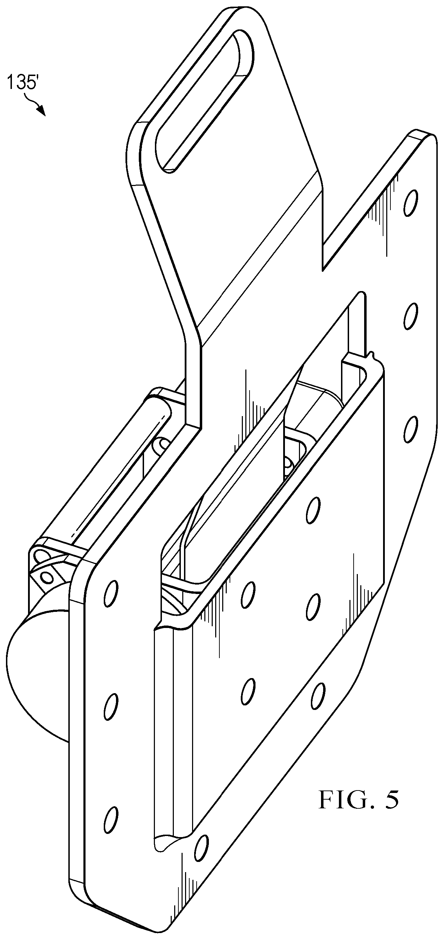

Figure 5 is a perspective view illustrating another shell-mounted retractor adapted to accommodate the auxiliary latch plate of Figure 4A, according to one or more alternative embodiments of the present disclosure.

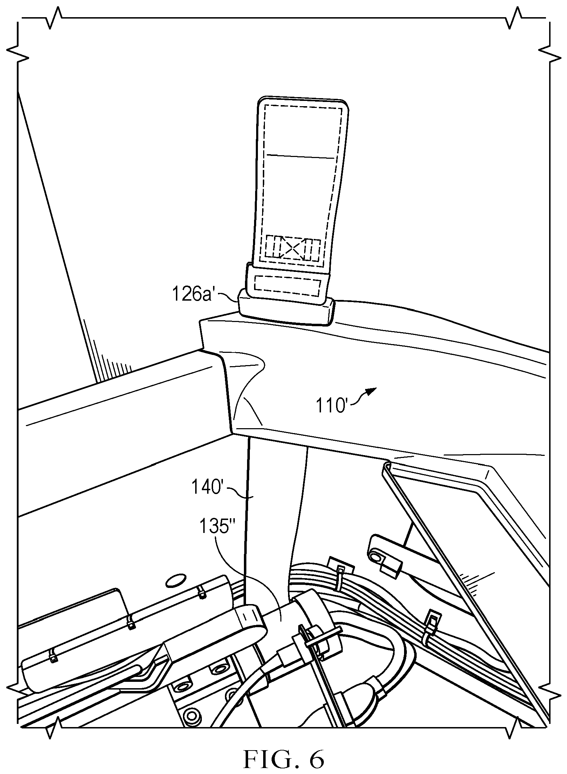

Figure 6 is a perspective view illustrating a floor-mounted retractor accommodating belt webbing that extends to an auxiliary latch plate, the auxiliary latch plate being accommodated by a portion of the suite shell in an unbuckled state or configuration, according to one or more alternative embodiments of the present disclosure.

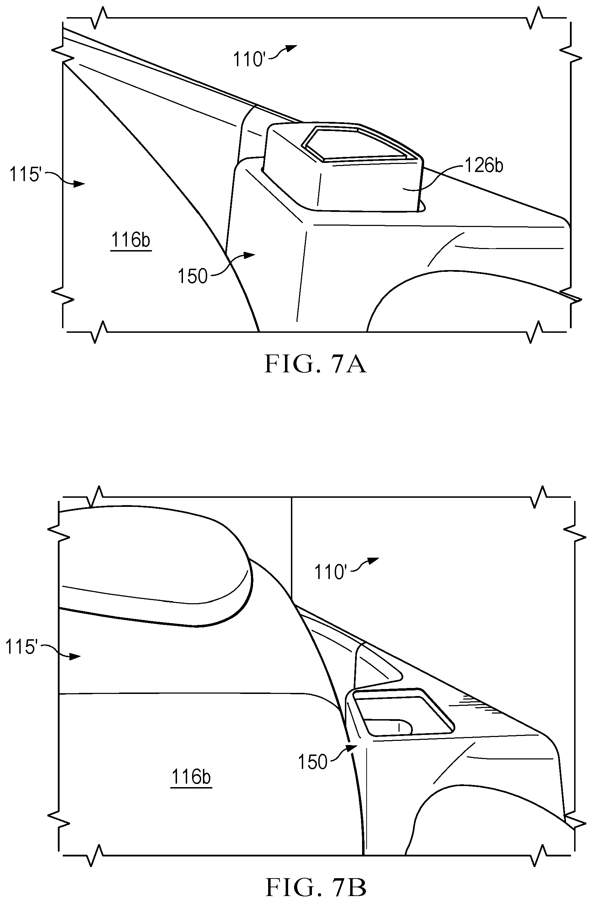

Figure 7A is a perspective view illustrating a housing accommodating an auxiliary buckle of the auxiliary belt restraint of Figures 2A-2B and 3A-3B in the unbuckled state or configuration, together with respective portions of the suite shell and the reclinable airplane seat, according to one or more embodiments of the present disclosure.
Figure 7B is a perspective view illustrating the housing of Figure 7A, together with respective portions of the suite shell and the reclinable airplane seat, according to one or more embodiments of the present disclosure.

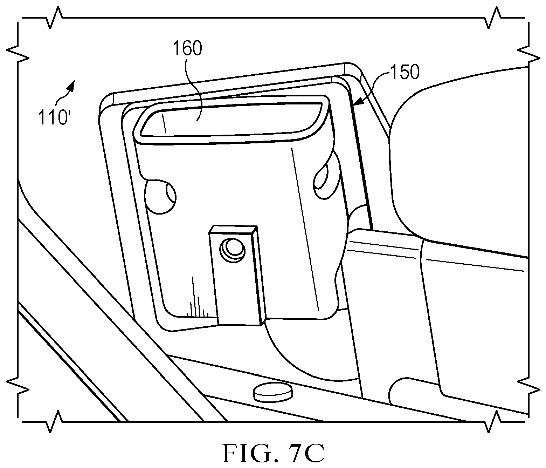

Figure 7C is a perspective view illustrating an auxiliary buckle mounting bracket of the housing of Figures 7A-7B, together with a portion of the suite shell, according to one or more embodiments of the present disclosure.

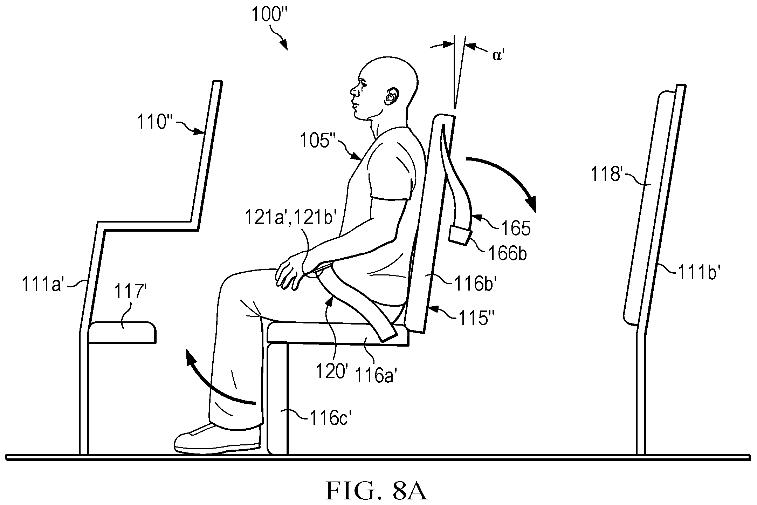

Figure 8A is a diagrammatic view illustrating an airplane suite in which a passenger is seated in a primary seating position, the airplane suite including a suite shell and a reclinable airplane seat, the reclinable airplane seat extending in an upright state or configuration, and the passenger being buckled in the primary seating position using a primary belt restraint coupled to or otherwise associated with the reclinable airplane seat, according to one or more alternative embodiments of the present disclosure.

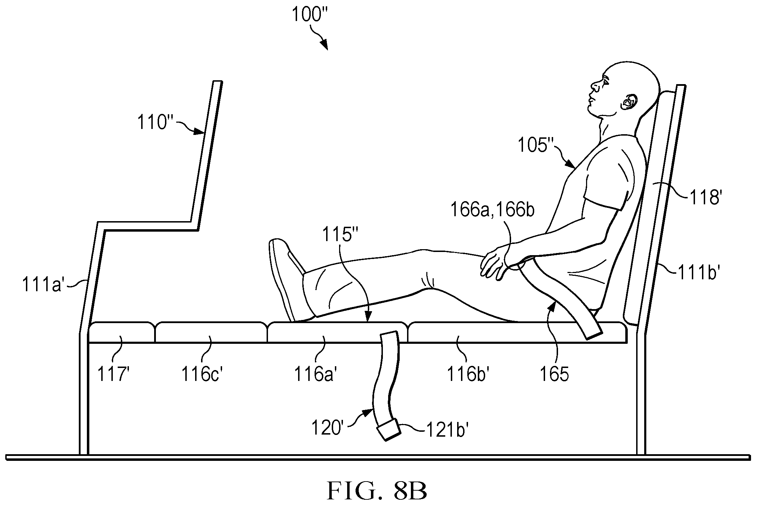

Figure 8B is a diagrammatic view illustrating the airplane suite of Figure 2A in which the passenger is seated in an auxiliary (e.g., rearward) seating position, the reclinable airplane seat extends in a reclined state or configuration, and the passenger is buckled in the auxiliary seating position using an auxiliary belt restraint coupled to or otherwise associated with the reclinable airplane seat, according to one or more alternative embodiments of the present disclosure.

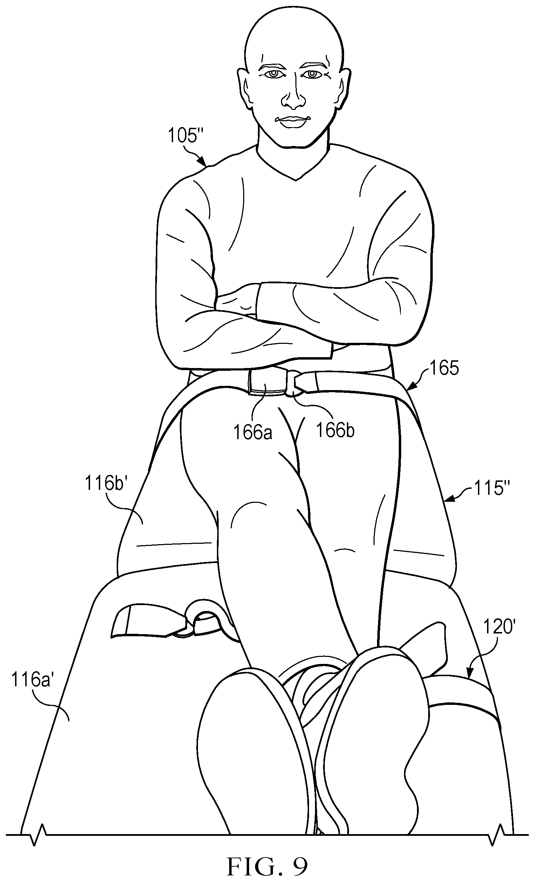

Figure 9 is a perspective view illustrating a portion of the airplane suite of Figures 8A-8B in which the passenger is seated in the auxiliary seating position, the reclinable airplane seat extends in the reclined state or configuration, and the passenger is buckled in the auxiliary seating position using the auxiliary belt restraint coupled to or otherwise associated with the reclinable airplane seat, according to one or more embodiments of the present disclosure.

### Detailed Description

Referring to Figure 1A, a perspective view of a portion an airplane suite 100, in which a passenger 105 is seated, is illustrated, according to one or more embodiments of the present disclosure. The airplane suite 100 is part of an airplane that includes a plurality of other similar airplane suites adjoining, or separated by an aisle from, the airplane suite 100. The airplane suite 100 includes a suite shell 110 and a reclinable airplane seat 115 in which the passenger 105 is seated. The reclinable airplane seat 115 is shown extending in a reclined state or configuration in Figure 1A.

Referring to Figure 1B, with continuing reference to Figure 1A, a perspective view of another portion of the airplane suite 100, in which the passenger 105 is seated, is illustrated, according to one or more embodiments of the present disclosure. The reclinable airplane seat 115 is shown in the reclined state or configuration in Figure 1B, similarly to Figure 1A.

Referring to Figure 2A, a diagrammatic view of an airplane suite 100' in which a passenger 105' is seated, in a primary seating position, is illustrated, according to one or more embodiments of the present disclosure. In one or more embodiments, the airplane suite 100' includes one or more components substantially identical (or at least similar) to the airplane suite 100, which substantially identical (or at least similar) components are given the same reference numerals, except that a suffix "'" is added. Thus, the airplane suite 100' includes a suite shell 110' and a reclinable airplane seat 115'. The suite shell 110' defines a forward portion 111a and a rearward portion 111b. The reclinable airplane seat 115' includes a seat portion 116a, a backrest portion 116b, and a footrest portion 116c. In one or more embodiments, as in Figure 2A, the airplane suite 100' also includes an auxiliary footrest 117 and an auxiliary backrest 118. The auxiliary footrest 117 is coupled to or otherwise associated with the shell 110' at the forward portion 111a, and the auxiliary backrest 118 is coupled to or otherwise associated with the shell 110' at the rearward portion 111b.

The reclinable airplane seat 115' is shown extending in an upright state or configuration in Figure 2A. In the upright state or configuration of the reclinable airplane seat 115', the backrest portion 116b extends non-horizontally. For example, the backrest portion 116b may extend in a slightly reclined position (i.e., at an angle α relative to vertical), thereby allowing the passenger 105' to sit on the seat portion 116a and lean back against the backrest portion 116b. The footrest portion 116c may also extend non-horizontally (e.g., in a lowered state or configuration) when the reclinable airplane seat 115' is in the upright state or configuration. Alternatively, the footrest portion 116c may extend in a raised state or configuration (e.g., substantially horizontally, as shown in Figure 2B) when the reclinable airplane seat 115' is in the upright state or configuration, thereby allowing the legs and/or feet of the passenger 105' to rest on the footrest 116c and/or the auxiliary footrest 117. The passenger 105' is buckled in the primary seating position using a primary belt restraint 120 (e.g., a nonretractable lap belt restraint). The primary belt restraint 120 is coupled to or otherwise associated with the reclinable airplane seat 115', and includes a primary latch plate 121a and a primary buckle 121b.

Referring to Figure 2B, with continuing reference to Figure 2A, a diagrammatic view of the airplane suite 100', in which the passenger 105' is seated in an auxiliary (e.g., rearward) seating position, is illustrated, according to one or more embodiments of the present disclosure. The reclinable airplane seat 115' is shown extending in a reclined state or configuration in Figure 2B. In the reclined state or configuration of the reclinable airplane seat 115', the backrest portion 116b extends in a substantially reclined position (i.e., horizontally or at least at an angle greater than the angle α and slightly less than 90 degrees), thereby allowing the passenger 105' to sit on the backrest portion 116b and lean back against the auxiliary backrest 118. In one or more embodiments, the footrest portion 116c extends in the raised state or configuration (e.g., substantially horizontally) when the reclinable airplane seat 115' is in the reclined state or configuration. However, although shown extending in the raised state or configuration (e.g., substantially horizontally) in Figure 2B, the footrest portion 116c may instead extend in the lowered state or configuration (e.g., substantially vertically, as shown in Figure 2A) when the reclinable airplane seat 115' is in the reclined state or configuration. The passenger 105' is buckled in the auxiliary seating position using an auxiliary belt restraint 125 (e.g., a retractable lap belt restraint; also visible in Figure 2A). The auxiliary belt restraint 125 is coupled to or otherwise associated with the suite shell 110', and includes an auxiliary latch plate 126a and an auxiliary buckle 126b.

Referring to Figure 3A, with continuing reference to Figures 2A-2B, a perspective view of a portion of the airplane suite 100', in which the passenger 105' is seated in the auxiliary seating position, is illustrated, according to one or more embodiments of the present disclosure. The reclinable airplane seat 115' extends in the reclined state or configuration. The passenger 105' is buckled in the auxiliary seating position using the auxiliary belt restraint 125 coupled to or otherwise associated with the suite shell 110'.

Referring to Figure 3B, with continuing reference to Figures 2A-2B, a top plan view of a portion of the airplane suite 100', including the auxiliary belt restraint 125 coupled to or otherwise associated with the suite shell 110', is illustrated, according to one or more embodiments of the present disclosure. The auxiliary belt restraint 125 is in an unbuckled state or configuration. The reclinable airplane seat 115' extends in the reclined state or configuration.

Referring to Figure 4A, with continuing reference to Figures 2A-2B and 3A-3B, a perspective view of the auxiliary latch plate 126a (also visible in Figure 3B) of the auxiliary belt restraint 125, in the unbuckled state or configuration, is illustrated, according to one or more embodiments of the present disclosure. Respective portions of the suite shell 110' and the reclinable airplane seat 115' are also illustrated together with the auxiliary latch plate 126a of the auxiliary belt restraint 125.

Referring to Figure 4B, with continuing reference to Figure 4A, a top plan view of part of a shell-mounted retractor 135 accommodating the auxiliary latch plate 126a, in the unbuckled state or configuration, is illustrated, according to one or more embodiments of the present disclosure. The shell-mounted retractor 135 also retractably accommodates belt webbing 140 (visible in Figure 4A) for the auxiliary belt restraint 125.

Referring to Figure 4C, with continuing reference to Figure 4B, a perspective view of the shell-mounted retractor 135 is illustrated, according to one or more embodiments of the present disclosure.

Referring to Figure 4D, with continuing reference to Figure 4C, a perspective view of a shroud 145 adapted to cover part of the shell-mounted retractor 135 that extends through the suite shell 110' and into an adjacent airplane suite, is illustrated, according to one or more embodiments of the present disclosure.

Referring to Figure 5, with continuing reference to Figure 4A, a perspective view of another shell-mounted retractor 135', adapted to accommodate the auxiliary latch plate 126a, is illustrated, according to one or more alternative embodiments of the present disclosure.

Referring to Figure 6, a perspective view of a floor-mounted retractor 135" accommodating belt webbing 140' that extends to an auxiliary latch plate 126a' is illustrated, according to one or more alternative embodiments of the present disclosure. The auxiliary latch plate 126a' is accommodated by a portion of the suite shell 110' in an unbuckled state or configuration.

Referring to Figure 7A, with continuing reference to Figures 2A-2B and 3A-3B, a perspective view of a housing 150 accommodating the auxiliary buckle 126b (both also visible in Figure 3B) of the auxiliary belt restraint 125, in the unbuckled state or configuration, is illustrated, according to one or more embodiments of the present disclosure. Respective portions of the suite shell 110' and the reclinable airplane seat 115' are illustrated together with the housing 150 accommodating the auxiliary buckle 126b of the auxiliary belt restraint 125.

Referring Figure 7B, with continuing reference to Figure 7A, a perspective view of the housing 150 is illustrated, according to one or more embodiments of the present disclosure. Respective portions of the suite shell 110' and the reclinable airplane seat 115' are illustrated together with the housing 150.

Referring to Figure 7C, with continuing reference to Figures 7A-7B, a perspective view of an auxiliary buckle mounting bracket 160 of the housing 150 is illustrated, according to one or more embodiments of the present disclosure. A portion of the suite shell 110' is also illustrated together with the auxiliary buckle mounting bracket 160 of the housing 150.

Referring to Figure 8A, a diagrammatic view of an airplane suite 100" in which a passenger 105" is seated, in a primary seating position, is illustrated, according to one or more alternative embodiments of the present disclosure. In one or more embodiments, the airplane suite 100" includes one or more components substantially identical (or at least similar) to the airplane suite 100 (or 100'), which substantially identical (or similar) components are given the same reference numerals, except that a suffix "'" (or an additional suffix "'") is added. Thus, the airplane suite 100" includes a suite shell 110" and a reclinable airplane seat 115". The suite shell 110" defines a forward portion 111a' and a rearward portion 111b'. The reclinable airplane seat 115" includes a seat portion 116a', a backrest portion 116b', and a footrest portion 116c'. In one or more embodiments, as in Figure 8A, the airplane suite 100" also includes an auxiliary footrest 117' and an auxiliary backrest 118'. The auxiliary footrest 117' is coupled to or otherwise associated with the shell 110" at the forward portion 111a', and the auxiliary backrest 118' is coupled to or otherwise associated with the shell 110" at the rearward portion 111b'.

The reclinable airplane seat 115" is shown extending in an upright state or configuration in Figure 8A. In the upright state or configuration of the reclinable airplane seat 115', the backrest portion 116b' extends non-horizontally. For example, the backrest portion 116b' may extend in a slightly reclined position (i.e., at an angle α' relative to vertical), thereby allowing the passenger 105" to sit on the seat portion 116a' and lean back against the backrest portion 116b'. The footrest portion 116c' may also extend non-horizontally (e.g., in a lowered state or configuration) when the reclinable airplane seat 115" is in the upright state or configuration. Alternatively, the footrest portion 116c' may extend in a raised state or configuration (e.g., substantially horizontally, as shown in Figure 8B) when the reclinable airplane seat 115" is in the upright state or configuration, thereby allowing the legs and/or feet of the passenger 105" to rest on the footrest 116c' and/or the auxiliary footrest 117'. The passenger 105" is buckled in the primary seating position using a primary belt restraint 120' (e.g., a nonretractable lap belt restraint). The primary belt restraint 120' is coupled to or otherwise associated with the reclinable airplane seat 115", and includes a primary latch plate 121a' and a primary buckle 121b'.

Referring to Figure 8B, with continuing reference to Figure 8A, a diagrammatic view of the airplane suite 100", in which the passenger 105" is seated in an auxiliary (e.g., rearward) seating position, is illustrated, according to one or more alternative embodiments of the present disclosure. The reclinable airplane seat 115" is shown extending in a reclined state or configuration in Figure 8B. In the reclined state or configuration of the reclinable airplane seat 115", the backrest portion 116b' extends in a substantially reclined position (i.e., horizontally or at least at an angle greater than the angle α' and slightly less than 90 degrees), thereby allowing the passenger 105" to sit on the backrest portion 116b' and lean back against the auxiliary backrest 118'. In one or more embodiments, the footrest portion 116c' extends in the raised state or configuration (e.g., substantially horizontally) when the reclinable airplane seat 115" is in the reclined state or configuration. However, although shown extending in the raised state or configuration, (e.g., substantially horizontally) in Figure 8B, the footrest portion 116c' may instead remain extending in the lowered state or configuration (e.g., substantially vertically, as shown in Figure 8A) when the reclinable airplane seat 115" in the reclined state or configuration of the reclinable airplane seat 115". The passenger 105" is buckled in the auxiliary seating position using an auxiliary belt restraint 165 (e.g., a nonretractable lap belt restraint; also visible in Figure 8A). The auxiliary belt restraint 165 is coupled to or otherwise associated with the reclinable airplane seat 115", and includes an auxiliary latch plate 166a and an auxiliary buckle 166b. For example, the auxiliary belt restraint 165 may be coupled to or otherwise associated with the backrest portion 116b' of the reclinable airplane seat 115".

Referring to Figure 9, with continuing reference to Figures 8A-8B, a perspective view of a portion of the airplane suite 100", in which the passenger 105" is seated in the auxiliary seating position, is illustrated, according to one or more embodiments of the present disclosure. The reclinable airplane seat 115" extends in the reclined state or configuration. The passenger 105" is buckled in the auxiliary seating position using the auxiliary belt restraint 165 coupled to or otherwise associated with the reclinable airplane seat 115".

It is understood that one or more of the embodiments described above and shown Figures 1A through 9 may be combined in whole or in part with one or more of the other embodiments described above and shown in Figures 1A through 9. In one or more of the embodiments described above and shown in Figures 1A through 9, any component referred to as a "primary latch plate" may also be referred to as a "primary restraint tip," and any component referred to as an "auxiliary latch plate" may also be referred to as an "auxiliary restraint tip."

A first airplane suite has been disclosed according to one or more embodiments of the present disclosure. The first airplane suite generally includes: an airplane seat actuable between: an upright state or configuration adapted to accommodate a passenger in a primary seating position; and a reclined state or configuration adapted to accommodate the passenger in an auxiliary seating position; a primary belt restraint adapted to buckle the passenger in the primary seating position when the airplane seat is in the upright state or configuration, wherein the primary belt restraint includes a primary latch plate and a primary buckle; and an auxiliary belt restraint adapted to buckle the passenger in the auxiliary seating position when the airplane seat is in the reclined state or configuration, wherein the auxiliary belt restraint includes an auxiliary latch plate and an auxiliary buckle. In one or more embodiments, the airplane seat includes a backrest portion. In one or more embodiments, the backrest portion of the airplane seat is adapted to be leaned back against by the passenger in the primary seating position. In one or more embodiments, the first airplane suite further includes an auxiliary backrest adapted to be leaned back against by the passenger in the auxiliary seating position. In one or more embodiments, the backrest portion of the airplane seat is further adapted to be sat on by the passenger in the auxiliary seating position. In one or more embodiments, in the upright state or configuration of the airplane seat, the backrest portion of the airplane seat extends at a first angle relative to vertical, and, in the reclined state or configuration of the airplane seat, the backrest portion of the airplane seat extends at a second angle relative to vertical, the second angle being greater than the first angle. In one or more embodiments, the airplane seat includes a footrest portion actuable between: a lowered state or configuration; and a raised state or configuration, in which the footrest portion is adapted to support the passenger at least in the primary seating position. In one or more embodiments, the auxiliary belt restraint is coupled to or otherwise associated with the airplane seat. In one or more embodiments, the first airplane suite further includes a suite shell. In one or more embodiments, the auxiliary belt restraint is coupled to or otherwise associated with the suite shell. In one or more embodiments, the first airplane suite further includes an auxiliary footrest coupled to or otherwise associated with the suite shell, wherein the auxiliary footrest is adapted to support the passenger at least in the primary seating position.

A second airplane suite has been disclosed according to one or more embodiments of the present disclosure. The second airplane suite generally includes: an airplane seat actuable between: an upright state or configuration adapted to accommodate a passenger in a primary seating position; and a reclined state or configuration adapted to accommodate the passenger in an auxiliary seating position; a primary belt restraint adapted to buckle the passenger in the primary seating position when the airplane seat is in the upright state or configuration; and an auxiliary belt restraint adapted to buckle the passenger in the auxiliary seating position when the airplane seat is in the reclined state or configuration; wherein the airplane seat includes a backrest portion; wherein, in the upright state or configuration of the airplane seat, the backrest portion of the airplane seat extends at a first angle relative to vertical; and wherein, in the reclined state or configuration of the airplane seat, the backrest portion of the airplane seat extends at a second angle relative to vertical, the second angle being greater than the first angle. In one or more embodiments, the backrest portion of the airplane seat is adapted to be leaned back against by the passenger in the primary seating position. In one or more embodiments, the second airplane suite further includes an auxiliary backrest adapted to be leaned back against by the passenger in the auxiliary seating position. In one or more embodiments, the backrest portion of the airplane seat is further adapted to be sat on by the passenger in the auxiliary seating position. In one or more embodiments, the airplane seat includes a footrest portion actuable between: a lowered state or configuration; and a raised state or configuration, in which the footrest portion is adapted to support the passenger at least in the primary seating position. In one or more embodiments, the auxiliary belt restraint is coupled to or otherwise associated with the airplane seat. In one or more embodiments, the second airplane suite further includes a suite shell. In one or more embodiments, the auxiliary belt restraint is coupled to or otherwise associated with the suite shell. In one or more embodiments, the second airplane suite further includes an auxiliary footrest coupled to or otherwise associated with the suite shell, wherein the auxiliary footrest is adapted to support the passenger at least in the primary seating position.

It is further understood that variations may be made in the foregoing without departing from the scope of the disclosure.

In one or more embodiments, the elements and teachings of the various embodiments disclosed herein may be combined in whole or in part in some or all of said embodiment(s). In addition, one or more of the elements and teachings of the various embodiments disclosed herein may be omitted, at least in part, or combined, at least in part, with one or more of the other elements and teachings of said embodiment(s).

Any spatial references such as, for example, "upper," "lower," "above," "below," "between," "bottom," "vertical," "horizontal," "angular," "upwards," "downwards," "side-to-side," "left-to-right," "left," "right," "right-to-left," "top-to-bottom," "bottom-to-top," "top," "bottom," "bottom-up," "top-down," etc., are for the purpose of illustration only and do not limit the specific orientation or location of the structure described above.

In one or more embodiments, while different steps, processes, and procedures are described as appearing as distinct acts, one or more of the steps, one or more of the processes, or one or more of the procedures may also be performed in different orders, simultaneously or sequentially. In one or more embodiments, the steps, processes, or procedures may be merged into one or more steps, processes, or procedures. In one or more embodiments, one or more of the operational steps in each embodiment may be omitted. Moreover, in some instances, some features of the present disclosure may be employed without a corresponding use of the other features. Moreover, one or more of the embodiments disclosed above, or variations thereof, may be combined in whole or in part with any one or more of the other embodiments described above, or variations thereof.

Although various embodiments have been disclosed in detail above, the embodiments disclosed are exemplary only and are not limiting, and those skilled in the art will readily appreciate that many other modifications, changes, and substitutions are possible in the embodiments without materially departing from the novel teachings and advantages of the present disclosure. Accordingly, all such modifications, changes, and substitutions are intended to be included within the scope of this disclosure as defined in the following claims. In the claims, means-plus-function clauses are intended to cover the structures described herein as performing the recited function and not only structural equivalents, but also equivalent structures. Moreover, it is the express intention of the applicant not to invoke 35 U.S.C. § 112(f) for any limitations of any of the claims herein, except for those in which the claim expressly uses the word "means" together with an associated function.

## Claims

1. An airplane suite, comprising:
an airplane seat actuable between:
an upright state or configuration adapted to accommodate a passenger in a primary seating position; and
a reclined state or configuration adapted to accommodate the passenger in an auxiliary seating position;
a primary belt restraint adapted to buckle the passenger in the primary seating position when the airplane seat is in the upright state or configuration, wherein the primary belt restraint comprises a primary latch plate and a primary buckle; and
an auxiliary belt restraint adapted to buckle the passenger in the auxiliary seating position when the airplane seat is in the reclined state or configuration, wherein the auxiliary belt restraint comprises an auxiliary latch plate and an auxiliary buckle.

2. The airplane suite of claim 1, wherein the airplane seat comprises a backrest portion.

3. The airplane suite of claim 2, wherein the backrest portion of the airplane seat is adapted to be leaned back against by the passenger in the primary seating position.

4. The airplane suite of claim 2 or 3, further comprising:
an auxiliary backrest adapted to be leaned back against by the passenger in the auxiliary seating position.

5. The airplane suite of claim 2, 3 or 4 wherein the backrest portion of the airplane seat is further adapted to be sat on by the passenger in the auxiliary seating position.

6. The airplane suite of any one of claims 2 to 5, wherein:
in the upright state or configuration of the airplane seat, the backrest portion of the airplane seat extends at a first angle relative to vertical; and
in the reclined state or configuration of the airplane seat, the backrest portion of the airplane seat extends at a second angle relative to vertical, the second angle being greater than the first angle.

7. The airplane suite of any one of claims 1 to 6, wherein the airplane seat comprises a footrest portion actuable between:
a lowered state or configuration; and
a raised state or configuration, in which the footrest portion is adapted to support the passenger at least in the primary seating position.

8. The airplane suite of any one of claims 1 to 7, wherein the auxiliary belt restraint is coupled to or otherwise associated with the airplane seat.

9. The airplane suite of any one of claims 1 to 8, further comprising a suite shell.

10. The airplane suite of claim 9, wherein the auxiliary belt restraint is coupled to or otherwise associated with the suite shell.

11. The airplane suite of claim 9 or 10, further comprising:
an auxiliary footrest coupled to or otherwise associated with the suite shell;
wherein the auxiliary footrest is adapted to support the passenger at least in the primary seating position.

12. An airplane suite, comprising:
an airplane seat actuable between:
an upright state or configuration adapted to accommodate a passenger in a primary seating position; and
a reclined state or configuration adapted to accommodate the passenger in an auxiliary seating position;
a primary belt restraint adapted to buckle the passenger in the primary seating position when the airplane seat is in the upright state or configuration; and
an auxiliary belt restraint adapted to buckle the passenger in the auxiliary seating position when the airplane seat is in the reclined state or configuration;
wherein the airplane seat comprises a backrest portion;
wherein, in the upright state or configuration of the airplane seat, the backrest portion of the airplane seat extends at a first angle relative to vertical; and
wherein, in the reclined state or configuration of the airplane seat, the backrest portion of the airplane seat extends at a second angle relative to vertical, the second angle being greater than the first angle.

13. The airplane suite of claim 12, wherein the backrest portion of the airplane seat is adapted to be leaned back against by the passenger in the primary seating position.

14. The airplane suite of claim 13, further comprising:
an auxiliary backrest adapted to be leaned back against by the passenger in the auxiliary seating position.

15. The airplane suite of claim 12, 13 or 14 wherein the backrest portion of the airplane seat is further adapted to be sat on by the passenger in the auxiliary seating position.

16. The airplane suite of any one of claims 12 to 15, wherein the airplane seat comprises a footrest portion actuable between:
a lowered state or configuration; and
a raised state or configuration, in which the footrest portion is adapted to support the passenger at least in the primary seating position.

17. The airplane suite of any one of claims 12 to 16, wherein the auxiliary belt restraint is coupled to or otherwise associated with the airplane seat.

18. The airplane suite of any one of claims 12 to 17, further comprising a suite shell.

19. The airplane suite of claim 18, wherein the auxiliary belt restraint is coupled to or otherwise associated with the suite shell.

20. The airplane suite of claim 18 or 19, further comprising:
an auxiliary footrest coupled to or otherwise associated with the suite shell;
wherein the auxiliary footrest is adapted to support the passenger at least in the primary seating position.
